# EUROPEAN PATENT APPLICATION

(11) **EP 2 246 795 A1**
(43) Date of publication of application: **03.11.2010**
(21) Application number: 08866063.4
(22) Date of filing: 02.12.2008
(51) Int. Cl.: G06F 17/30

(54) **ACCESS SUBJECT INFORMATION RETRIEVAL DEVICE**

(30) Priority: 30.12.2007 JP 2007341568
(71) Applicant: Yuwings Corporation, Kanagawa 224-0055 (JP)
(72) Inventor: OE, Yutaka, Yokohama-shi Kanagawa 224-0055 (JP); OE, Yumi, Yokohama-shi Kanagawa 224-0055 (JP)
(74) Representative: Gille Hrabal Struck Neidlein Prop Roos
(86) International application number: PCT/JP2008/071864
(87) International publication number: WO 2009/084363

(57) **Abstract**

Based upon user information stored in a user information storage section, a group creation processing section 133 evaluates similarity between user attributes, and creates groups including pluralities of users being evaluated to possess mutual similarity. On the basis of this result, when access is made to a subject for access, a user suggestion processing section 135 increases recommendation points for the subject in the group to which the user belongs, by just a first number of points; and also, if an evaluation of the subject is registered, changes the recommendation points for the subject in the group, by an amount of points corresponding to the details of this evaluation registration. Based on the updated recommendation points of the subject, access subject recommendation information is transmitted to the user terminal device of each user belongs to the group. As a result, it is possible to support efficient access to the subjects that are useful to the users.

## Description

### Technical Field

The present invention relates to an access subject information retrieval device, and more particularly relates to an access subject information retrieval device which supplies access subject retrieval information to a user via a user terminal device.

### Background At

In recent years, along with the evolution of internet technology and the increase in the number of users of internet communications, attention has been directed to the technology of search engines which search websites upon the internet and transmit the results of such searches to user terminal devices. As such search engines, there are known from the past robot type search engines and directory type search engines and so on, which perform keyword searching.

However while, in the case of a robot type search engine, there is the advantage that the amount of information that is gathered is large, the obverse is that, since the indexing is performed simply from the words appearing in the website information that has been gathered, accordingly, when the search robot performs keyword searching, a very large number of websites are hit, which is undesirable. Due to this, there has been a tendency for a long time to be required for the user to open a target website. Moreover, if searching is performed for the same keyword again, since the search robot performs the searching, the same search results are obtained, and it has not been possible to reflect the characteristics of the user who specified the keyword.

Furthermore, in the case of a directory type search engine, since the input and classification of website data is performed by hand, it is impossible to deal with the vastly increased number of websites, and it is only possible to perform searching of famous websites. Moreover, since also the classification of websites is only performed by fields, accordingly, in a similar manner to the case of a robot type search engine, if searching is performed for the same keyword again, the same search results are obtained, and it has not been possible to reflect the characteristics of the user who specified the keyword.

Thus a search engine technique has been proposed (refer to Patent Document 1, hereinafter referred to as the prior art example) in which, while taking a large number of websites as subjects, it is possible to perform searching in which the characteristics of each user are reflected. With this prior art example search engine, along with all the bookmark information of all the users being stored in the search engine, analysis is performed of the conditions of usage of these stored bookmarks by each of the users, and of the conditions of usage by each user for whom attributes are registered on the search engine side. And it is arranged to create retrieval information that is considered, on the basis of the results of this analysis, to be optimum according to the attributes of each user, and to transmit this terminal information to the terminal device of each user.

Patent Document 1: Japanese Laid-Open Patent Publication 2002-351916.

### DISCLOSURE OF THE INVENTION

### PROBLEMS TO BE SOLVED BY THE INVENTION

The technique of the prior art example described above is an improvement over the techniques of previous search engines, from the point of view that the individual characteristics of the various users are reflected. However, with the technique of this prior art example, the retrieval information which is considered to be optimum for the attributes of each user is created only on the basis of the actual track records of utilization of specified websites, in other words only on the basis of the number of times those specified websites are accessed. Due to this, a site which the user has decided is not useful although he has accessed it, and a site which the user has decided is useful as a result of accessing it, are treated as being of the same worth.

What is very important to each user is to access more useful websites, rather than simply accessing websites that have been accessed many times. Due to this, a technique has been eagerly awaited for supporting efficient access to websites which, from the point of view of each user, are more useful.

It should be understood that such a technique as described above for supporting efficient access is needed not only for accessing websites via the internet, but also in scenarios such as accessing document files or the like upon an internal business network via an intranet.

The present invention has been conceived in consideration of the circumstances described above, and takes as its object to provide an access subject information retrieval device which can enhance the convenience from the point of view of its users by supporting efficient access by each user to access subjects that are useful to him.

### MEANS FOR SOLVING THE PROBLEMS

The present invention is access subject information retrieval device that supplies retrieval information for access subjects to users via user terminal devices, comprising: a user profile information storage means in which is registered, for each user, a set of user profile information that is information about at least one type of attribute of the user; a group creation means that evaluates similarity between a plurality of said sets of user profile information registered in said user profile information storage means, and creates a group including a plurality of users for whom it has been evaluated that they possess mutual similarity; a group specification means that specifies at least a single group to which each user belongs; an access subject recommendation points updating means that increases recommendation points of said access subject that has been accessed for the group to which the user who has performed said access belongs by just a first number of points, when access to an access subject is performed by a user, and also changes the recommendation points of said access subject for which said access subject evaluation registration has been performed, for the group to which the user who has performed said access subject evaluation registration belongs by just a number of points that corresponds to the details of said access subject evaluation registration, when access subject evaluation registration is performed, which is evaluation registration of an access subject by a user; and a retrieval information transmission means that obtains access subject priority levels, that are priority levels for supply of access subject information that has been found, on the basis of the results of updating by said access subj ect recommendation points updating means and on the basis of the type of group to which the user of said user terminal device belongs, and transmits recommended access subject information to said user terminal device according to said access subject priority levels..

With this access subject information retrieval device, user profile information, which is at least one type of user attribute information for each user, is registered in the user profile information storage means. This registration of user profile information is performed each time a new user is added, and each time the user attribute information that has already been added is changed.

In parallel with this execution of user profile information registration, the group creation means evaluates similarities between a plurality of sets of said user profile information that are registered in the user profile information storage means, and creates groups which include pluralities of users for whom it has been evaluated that they possess mutual similarity. This group creation may be performed by evaluating similarities between the various items in the user profile information sets; or it may be arranged to consider pluralities of items in the user profile information sets as variables, and to perform group creation using a technique of multivariate analysis.

It should be understood that, during this group creation, from the viewpoint of versatility, it would be possible, for example, to arrange for group creation to be performed according to themes of various types. While doing this, it is also desirable to allow the possibility that a single user may belong to a plurality of groups. Moreover, since this group creation corresponds to changing of the registered details of the user profile information, it is desirable to arrange for it to be performed periodically.

After the group creation described above has been performed, when access to an access subject is performed by a user, the access subject recommendation points updating means increases the recommendation points for that access subject which has been accessed, for the group to which the user who has performed access belongs, by just a first number of points, and also, when an access subject evaluation registration, i.e. a registration of an evaluation of an access subject, is made by a user, changes the recommendation points of this access subject for which access subject evaluation registration has been made, for the group to which the user who performed the access subject evaluation registration belongs, by just a number of points which corresponds to the details of this access subject evaluation registration. In other words, when a user who belongs to some particular group actually accesses an access subject which has been specified, then the recommendation points for that specified access subject in relation to that particular group are increased by just the first number of points. Moreover, if the user decides that this specified access subject has been useful, and registers an evaluation result, then the recommendation points for that specified access subject in relation to that particular group are changed by just the number of points that correspond to the result of that evaluation. As a result, not only is the track record of accesses reflected in the recommendation points for that specified access subject, but also the results of decisions as to usefulness for persons who belong to that particular group are reflected therein as well.

It should be understood that access subject evaluation registration related to some access subject is sometimes made by a user who performs access to that access subject and thus has become aware of its content, and is sometimes made by a user who already knows the content of this access subject.

Furthermore, sometimes the result of evaluation of the usefulness of the access subject is positive, and sometimes it is negative. And, if this evaluation result in relation to usefulness is positive, then the access subject recommendation points updating means increases the recommendation points. On the other hand, if the evaluation result in relation to usefulness is negative, then the access subject recommendation points updating means decreases the recommendation points.

In this manner, the retrieval information transmission means obtains access subject priority levels, which are priority levels for supply of the access subject information that has been found, on the basis of the access subject recommendation points that have been updated, and on the basis of the type of group to which the user belongs. And the retrieval information transmission means transmits the recommended access subject information to the user terminal device, according to the access subject priority levels that have been obtained.

By doing this, access subject retrieval information that reflects the characteristics of the group to which each of the users belongs is supplied to that user. Thus, according to the access subject information retrieval device of the present invention, it is possible to support efficient access by each user to access subjects that are useful to him, and it is therefore possible to enhance the convenience for the user.

With the access subject information retrieval device of the present invention, along with said access subject evaluation registration being registration of an access subject that does not include any result evaluation parameter, it may be arranged, when said access subject evaluation registration has been performed, for said access subject recommendation points updating means to increase the recommendation points of the access subject for which said access subject evaluation registration has been performed, for the group to which the user who has performed said access subject evaluation registration belongs, by just a second number of points which is greater than said first number of points. In this case, in the decision about the usefulness to users who belong to the group, it becomes possible to attach more importance to active access subject evaluation registration related to said specified access subject by each user, than to mere access to an access subject that has been specified; and thus it becomes possible to supply to each user, in an appropriate manner, recommended access subject information in which the characteristics of the groups to which each user belongs are reflected.

Furthermore, with the access subject information retrieval device of the present invention, along with said access subject evaluation registration being registration of an access subject that includes a result evaluation parameter, it may be arranged, when said access subject evaluation registration has been performed, for said access subject recommendation points updating means to change the recommendation points of the access subject for which said access subject evaluation registration has been performed, for the group to which the user who has performed said access subject evaluation registration belongs, by just a number of points which corresponds to the value of said evaluation parameter. In this case, it becomes possible to supply to the users, in an appropriate manner, recommended access subject information in which is reflected a degree of usefulness or of uselessness as indicated by active access subject evaluation registration by each user related to said specified access subject.

Furthermore, with the access subject information retrieval device of the present invention, it may be arranged for the retrieval information transmission means to transmit recommended access subject information to said user terminal device, with the exception of an access subject for which the user of said user terminal device has performed said access subject evaluation registration. In this case, for example, if the access subject is information related to goods, and access subject evaluation registration has been performed after these goods have been purchased and used, so that it is not necessary to recommend this access subject a second time to the user terminal device which has been utilized for that access subject evaluation registration, then it is possible to prevent the user of that utilized terminal device from experiencing annoyance due to re-recommendation of that access subject.

Furthermore, with the access subject information retrieval device of the present invention, said access subject may be at least one of a website and an information page to which said user terminal device is connected over the internet; or, said access subject may be at least one of a site and a document file which can be accessed by said user terminal device via an intranet to which said user terminal device is connected.

Furthermore, with the access subject information retrieval device of the present invention, it may be arranged for at least one, chosen from the group consisting of bookmark information stored in said user terminal device and access subject evaluation information and keyword information, to be included in said user attribute information. Here, if the bookmark information is arranged hierarchically, the format of this hierarchy may also be included in this user attribute information.

Furthermore, with the access subject information retrieval device of the present invention, it may be arranged for at least one, selected from the group consisting of history information about access subject evaluation registration by the user, deletion history information about evaluation registration for said access subject, history information about keyword registration, deletion history information about registration of said keyword, history information about access to the access subject, and history information about keyword searching, to be included in said user attribute information.

Furthermore, with the access subject information retrieval device of the present invention, it may be arranged for user demographic information about the user, such as the age, sex, job, or the like of the user, to be included in said user attribute information.

It should be understood that, if the access subject is in in-business site upon an in-business intranet, or is a document file which can be accessed by user terminal devices via an in-business intranet to which they are connected, then, when performing group separation by demographic information, generally there will be a tendency for weightings in relation to business organization such as range of duties, department of affiliation, and so on to be greater.

Furthermore, with the access subject information retrieval device of the present invention, it may be arranged, when it is possible to acquire group separation information provided by association with an external social networking service which a user utilizes, for said group separation information to be included in said user attribute information.

Furthermore, it would be possible to arrange for options for predetermined items in the user attribute information to be provided from the access subject information retrieval device, and for the user to be able to include selected details from those options.

Since during group creation it is possible to accord consideration to many types of user attributes as described above, accordingly it is possible to perform creation of groups in which the individuality of users from various aspects is reflected with good accuracy.

It should be understood that it would also be possible to arrange to perform group creation while according consideration only to the above described common user attributes, or only to user group information specified by a SNS or the like.

Furthermore, the access subject information retrieval device of the present invention may further comprise: a keyword recommendation points updating means which increases recommendation points for the keyword designated in said keyword search request for the group to which the user who has performed said keyword search request belongs by just a third number of points, when a keyword search request is issued by a user, and changes the recommendation points for the keyword for which said keyword evaluation registration has been performed for the group to which the user who has performed said keyword search request belongs by just a number of points that corresponds to the details of said keyword evaluation registration, when a keyword evaluation registration is performed by a user who has performed said keyword search request; and a keyword information transmission means which obtains keyword priority levels, which are priority levels for supply of recommended keywords, on the basis of the results of updating by said keyword recommendation points updating means and on the basis of the type of group to which the user of said user terminal device belongs, and transmits recommended keyword information to said user terminal device according to said keyword priority levels.

In this case, when a keyword search request has been issued by a user, the keyword recommendation points updating means increases the number of recommendation points for the keyword designated in said keyword search request, for the group to which the user who has performed said keyword search request belongs, by just the third number of points; and also, when a keyword evaluation registration is performed by the user who has performed said keyword search request, changes the recommendation points for the keyword for which said keyword evaluation registration has been performed, for the group to which the user who has performed said keyword search request belongs, by just a number of points that corresponds to the details of said keyword evaluation registration. In other words, when a user who has been categorized as belonging to some specified group actually performs keyword searching using a specified keyword, the recommendation points for that specified keyword in relation to that specified group are increased by just the third number of points. And, when the user who has utilized that specified keyword decides that that specified keyword has been useful and perfonns registration of that specified keyword, the recommendation points for that specified keyword in relation to that specified group are changed by just a number of points that corresponds to the details of that keyword evaluation registration. As a result, not only is the actual track record of utilization of that specified keyword reflected in its recommended points, but also the results of decisions as to usefulness by people who belong to that specified group are also reflected therein.

It should be understood that sometimes an affirmative evaluation result of the usefulness of the keyword is obtained, and sometimes a negative result is obtained. And, if this evaluation result in relation to usefulness is affirmative, then the keyword recommendation points updating means increases said recommendation points. On the other hand, if this evaluation result in relation to usefulness is negative, then the keyword recommendation points updating means decreases said recommendation points.

And the keyword information transmission means obtains keyword priority levels, which are priority levels for supply of recommended keywords, on the basis of the results of updating the keyword recommendation points by said keyword recommendation points updating means and on the basis of the type of group to which the user of said user terminal device belongs, and transmits recommended keyword information to said user terminal device according to said keyword priority levels. Due to this, during keyword searching for an access subject, it is possible to supply keyword candidates to the user, in which the usefulness from the point of view of each group to which the user belongs is reflected.

Here, if it is supposed that said keyword evaluation registration is registration of a keyword that does not include a result evaluation parameter, then it may be arranged, when said keyword evaluation registration has been performed, for said keyword recommendation points updating means to increase the recommendation points of the keyword for which said keyword evaluation registration has been performed, for the group to which the user who has performed said keyword evaluation registration belongs, by just a fourth number of points which is higher than said third number of points. In this case, it is possible to supply to the user recommended keyword information that reflects the degree of usefulness or uselessness, as evidenced by active keyboard evaluation registration by each of the users in relation to that specified keyword, in an appropriate manner.

Moreover, if it is supposed that said keyword evaluation registration is registration of a keyword that includes a result evaluation parameter, then it may be arranged, when said keyword evaluation registration has been performed, for said keyword recommendation points updating means to change the recommendation points of the keyword for which said keyword evaluation registration has been performed, for the group to which the user who has performed said keyword evaluation registration belongs, by just a number of points that corresponds to the value of said evaluation parameter. In this case as well, it is possible to supply to the user recommended keyword information that reflects the degree of usefulness or uselessness, as evidenced by active keyboard evaluation registration by each of the users in relation to that specified keyword, in an appropriate manner.

Moreover, it may also be arranged for there to be further included an additional keyword candidate transmission means which when it has been discovered, on the basis of the keyword that has been designated in said keyword search request, that a keyword which it is supposed will be useful exists in relation to a group to which the user who has issued said keyword search request belongs, transmits said keyword which has been found to the user terminal device of the user who issued said keyword search request. In this case it is possible to enhance the convenience from the point of view of the user by yet a further level, since it is possible to supply to the user, as additional keywords, keywords which, on the basis of the keyword specified by the keyword search request, it is supposed may be useful.

### Advantageous Effect of the Invention

As has been explained above, according to the access subject retrieval method and the access subject retrieval device of the present invention, the advantageous effect is obtained that it is possible to enhance the convenience for users by supporting efficient access by each user to access subjects which are useful to him.

### BRIEF DESCRIPTION OF THE DRAWINGS

Fig. 1 is a figure for explaining devices of various types that are connected to a web information retrieval device, i.e. an access subject information retrieval device, according to an embodiment of the present invention;
Fig. 2 is a structural block diagram schematically showing the structure of the web information retrieval device of Fig. 1;
Fig. 3 is a block diagram for explanation of the structure of a user information registration server of Fig. 2;
Fig. 4 is a block diagram for explaining the structure of a keyword server of Fig. 2;
Fig. 5 is a block diagram for explaining the structure of a user management server of Fig. 2;
Fig. 6 is a block diagram for explaining the structure of a user suggestion processing section of Fig. 5;
Fig. 7 is a block diagram for explaining the structure of a site information processing section of Fig. 6; and
Fig. 8 is a block diagram for explaining the structure of a keyword information processing section of Fig. 6.

### BEST MODES FOR CURRYING OUT THE INVENTION

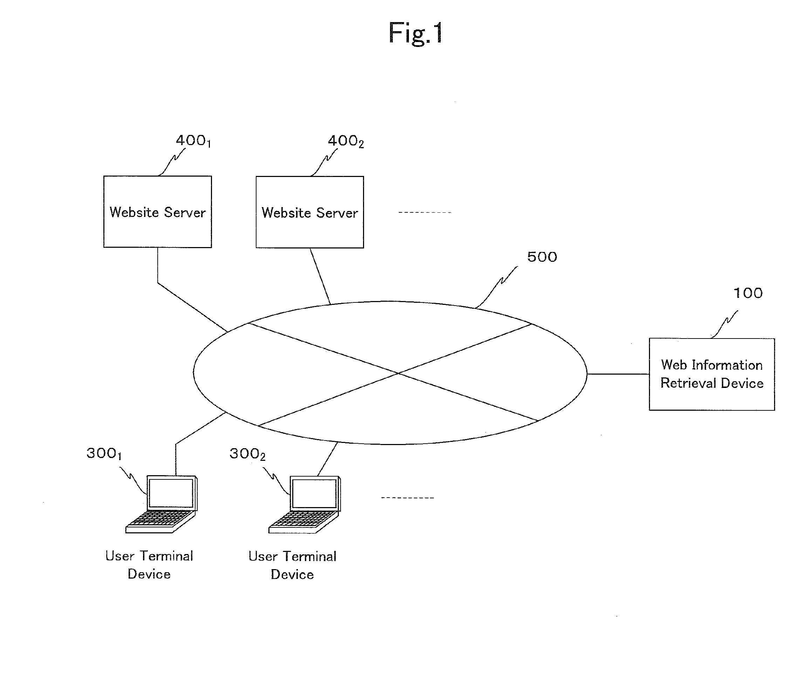

An embodiment of the present invention will now be explained with reference to Figs. 1 through 8. It should be understood that, to elements in the various drawings which are identical or equivalent, identical reference numerals are affixed, and duplicated explanation is omitted.

### [Structure]

As shown in Fig. 1, a web information retrieval device 100 according to this embodiment, i.e. an access subject information retrieval device, is connected to the internet 500. In addition to this web information retrieval device 100, user terminal devices 300₁, 300₂, ... and website servers 400₁, 400₂, ... are also connected to the internet 500. Due to this, the web information retrieval device 100 is enabled to perform communication with the user terminal devices 300₁, 300₂, ... and the website servers 400₁, 400₂, ....

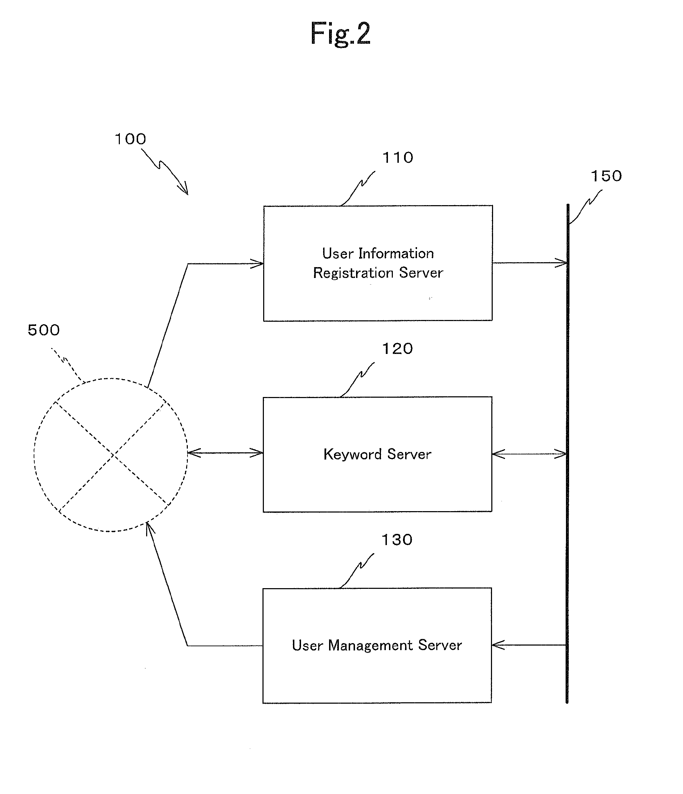

As shown in Fig. 2, the web information retrieval device 100 comprises a user information registration server 110, a keyword server 120, and a user management server 130. Each of the user information registration server 110, the keyword server 120, and the user management server 130 is connected to the internet 500. Furthermore, each of the user information registration server 110, the keyword server 120, and the user management server 130 is connected to a local area network (i.e. a LAN) 150, and thus these devices are enabled mutually to perform high speed data communication between one another via this LAN 150.

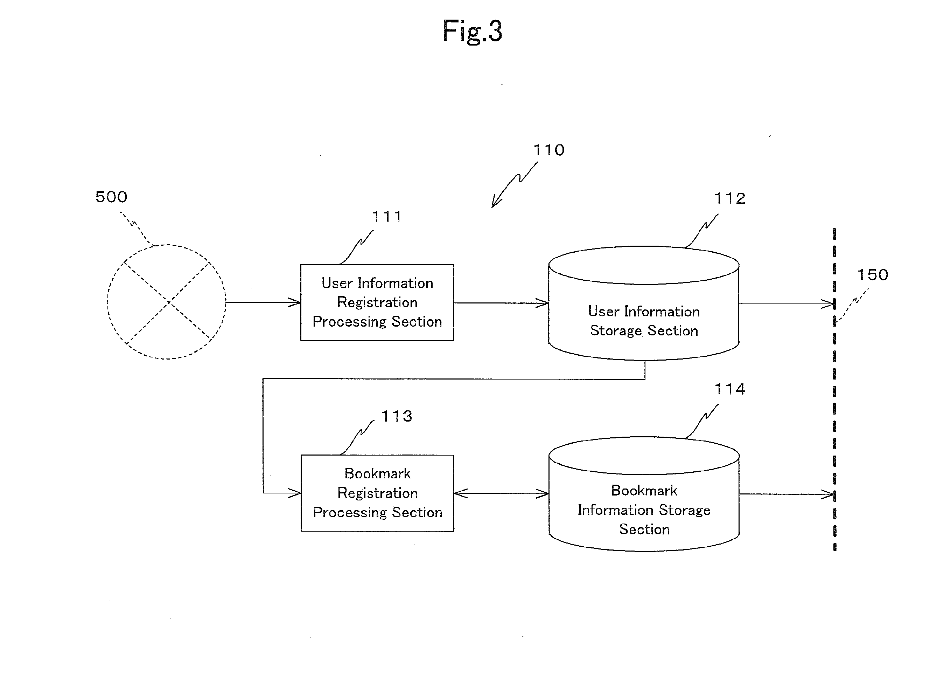

As shown in Fig. 3, the user information registration server 110 comprises a user information registration processing section 111 and an information storage section 112. Furthermore, the user information registration server 110 comprises a bookmark registration processing section 113 and a bookmark information storage section 114.

The user information registration processing section 111 receives information about web access associations acquired by the user terminal devices 300ⱼ (j=1, ...) via the internet 500. As such information about web access associations, in addition to information about bookmarks stored upon user terminal devices, information about website registrations by users, registration deletion history information for websites that have been registered, keyword registration information, registration deletion history information for keywords that have been registered, keyword search request operation information, and website reading information, there is also included user attribute registration operation information that includes details of selection from certain sets of options for predetermined items by users who have responded to invitations from the web information retrieval device 100 to choose from those sets of options, and so on. Here, it may be arranged for demographic information about users, such as for example, age, sex, job and the like, to be registered by user attribute registration operation. This type of information is utilized as user attribute information.

And for each user terminal device 300ⱼ (j=1, ...), in other words for each user, the user information registration processing section 111 updates the user attribute information, such as operation history and so on, and registers this information in the user information storage section 112.

The bookmark registration processing section 113 updates bookmark rankings on the basis of the bookmark information details in the user information in the user information storage section 112 as updated by the user information registration processing section 111, and stores these rankings in the bookmark information storage section 114. Here, in these bookmark rankings, there are included the registration history of the bookmarks, the number of times and the frequency of reading each website, and so on.

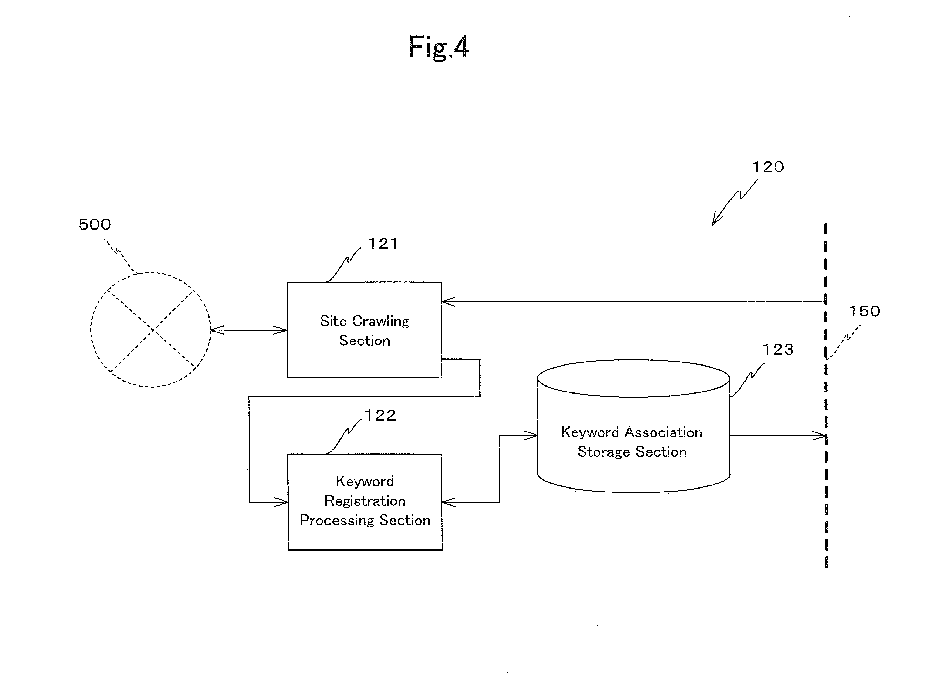

As shown in Fig. 4, the keyword server 120 comprises a site crawling¹ section 121, a keyword registration processing section 122, and a keyword association storage section 123. In this keyword association storage section 123, for each keyword, there are registered corresponding websites in association therewith.
¹ This is the term commonly used for robots (spiders) that work through websites.

The site crawling section 121 sequentially accesses the websites specified by the bookmarks that are stored in the above described bookmark information storage section 114, and acquires the contents of the websites that it has accessed. And it sends the results that are acquired to the keyword registration processing section 122, along with the identifiers of the websites that have been read.

Upon receipt of a website identifier and website contents, the keyword registration processing section 122 first extracts keywords from the website contents. And, on the basis of the results of this extraction and the website identifier, after having performed separation by genre and/or similarity evaluation, the keyword registration processing section 122 updates the stored details in the keyword association storage section 123.

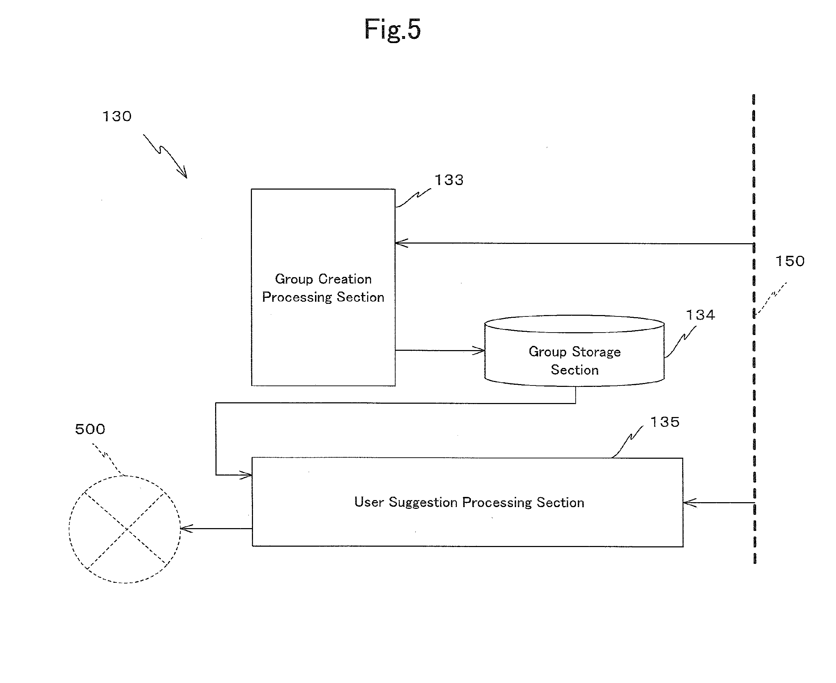

As shown in Fig. 5, the user management server 130 comprises a group creation processing section 133 and a group storage section 134. Moreover, the user management server 130 comprises a user suggestion processing server 135.

On the basis of the details stored in the user information storage section 112, the group creation processing section 133 evaluates similarity between the attribute information of a plurality of users, and creates one or more groups each including a plurality of users for which it has been evaluated that they possess mutual similarity. Here, if the bookmark information is arranged hierarchically, then the creation of the group also takes into consideration the way this hierarchy is configured. The groups created in this manner are registered in the group storage section 134, along with information about the members who constitute the groups. It should be understood that, in this group creation process, evaluation of similarity between various items of user profile information may also be performed, and it may also be practiced to perform this using a technique of multivariate analysis, by considering sets of pluralities of items in the user profile information as variables.

It should be understood that during group creation, in this embodiment, the group creation is performed from a multi-pronged standpoint. Due to this, sometimes a single user may, in the end, belong to a plurality of groups. Furthermore, it is arranged for this group creation to be performed periodically, in order to respond to changes of the registered details of user profile information.

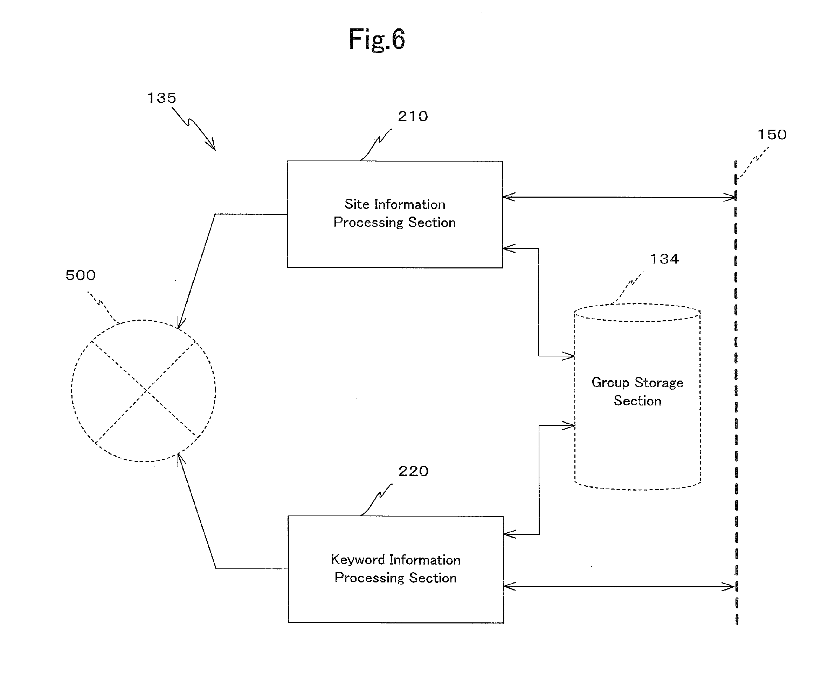

As shown in Fig. 6, the user suggestion processing section 135 comprises a site information processing section 210 and a keyword information processing section 220.

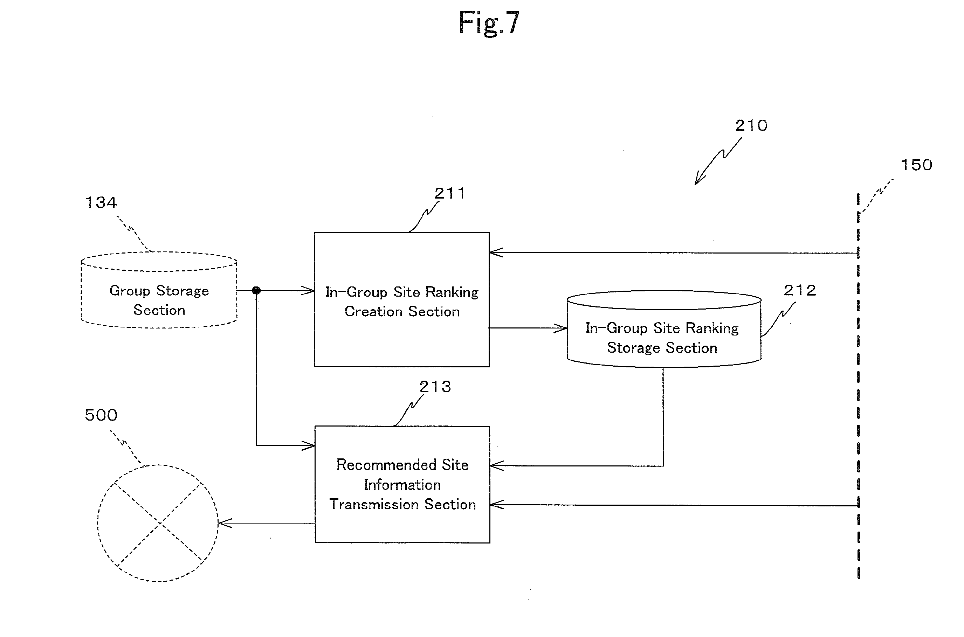

As shown in Fig. 7, the site information processing section 210 comprises an in-group site ranking creation section 211 and an in-group site ranking storage section 212. Moreover, the site information processing section 210 comprises a recommended site information transmission section 213.

The in-group site ranking creation section 211 creates in-group site rankings, which are site rankings for each group, on the basis of the details in the website register and the website reading history in the user information storage section 112 described above, and the details stored in the group storage section 134 described above. This in-group site ranking includes recommendation points for each website.

When creating these in-group site rankings, if, according to the website registration information in the user information storage section 112, the in-group site ranking creation section 211 knows that website registration has been performed by a user, then it first specifies the group to which the user who has performed this registration belongs, on the basis of the details stored in the group storage section 134.

If it is possible to specify the group to which the user who has performed website registration belongs, then the in-group site ranking creation section 211 increases the recommendation points of that website in the site rankings of the specified group by just a predetermined number of points. And, on the basis of this result, the in-group site ranking creation section 211 updates the details stored in the in-group site ranking storage section 212.

Furthermore if, according to the deletion history information of websites registered in the user information storage section 112, the in-group site ranking creation section 211 knows that deletion of website registration has been performed by a user, then it first specifies the group to which the user who has performed this deletion of registration belongs, on the basis of the details stored in the group storage section 134.

If it is possible to specify the group to which the user who has performed website registration deletion belongs, then the in-group site ranking creation section 211 decreases the recommendation points of that website in the site rankings of the specified group by just a predetermined number of points. And, on the basis of this result, the in-group site ranking creation section 211 updates the details stored in the in-group site ranking storage section 212.

Furthermore if, on the basis of the website reading history in the user information storage section 112, the in-group site ranking creation section 211 knows that access to a website has been performed by a user, then it first specifies the group to which the user who has performed this access belongs, on the basis of the details stored in the group storage section 134.

If it is possible to specify the group to which the user who has performed access belongs, then the in-group site ranking creation section 211 increases the recommendation points of that website in the site rankings of the specified group by just a first number of points. And, on the basis of this result, the in-group site ranking creation section 211 updates the details stored in the in-group site ranking storage section 212.

Furthermore if, on the basis of the details of the site registration operations in the user information storage section 112, the in-group site ranking creation section 211 knows that new site registration in relation to a specified website has been performed, then it first specifies the group to which the user who has performed this new site registration belongs, on the basis of the details stored in the group storage section 134.

If it is possible to specify the group to which the user who has performed the new site registration belongs, then the recommendation points of that website in the site rankings of the specified group are increased by just a second number of points that is higher than the first number of points. And, on the basis of this result, the in-group site ranking creation section 211 updates the details stored in the in-group site ranking storage section 212.

If it has been decided, on the basis of the details stored in the user information storage section 112 described above, that it is possible to transmit recommended site information to some particular user, then first the group to which this particular user belongs is specified, on the basis of the details stored in the group storage section 134.

If it is possible to specify the group to which this particular user belongs, then the recommended site information transmission section 213 obtains a site priority level, i.e. a priority level for supplying website information that has been found, on the basis of the in-group site ranking related to the specified group in the in-group site ranking storage section 212. And, according to the site priority level that has been obtained, the recommended site information transmission section 213 transmits recommended site information to that particular user.

It should be understood that, when a search is performed corresponding to a keyword search request, if some specified keyword agrees perfectly with any one of the registered keywords, then the recommended site information transmission section 213 performs searching using the specified keyword just as it is. On the other hand, if no registered keyword is present which agrees perfectly with the specified keyword, then it is arranged to interpret the specified keyword semantically, and to perform searching using a registered keyword that is associated with the specified keyword.

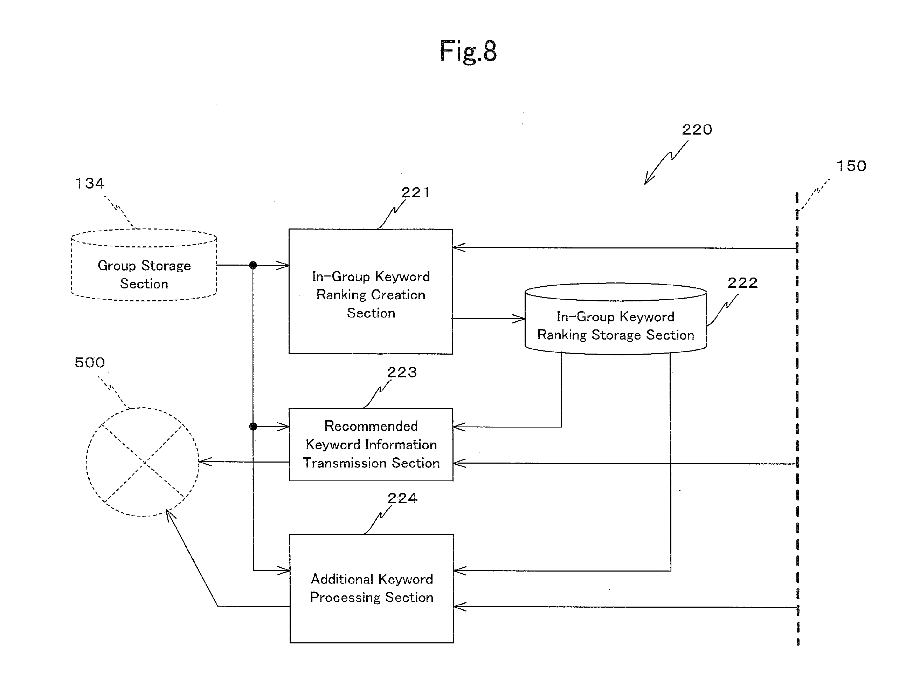

As shown in Fig. 8, the keyword information processing section 220 comprises an in-group keyword ranking creation section 221 and an in-group keyword ranking storage section 222. Furthermore, the keyword information processing section 220 comprises a recommended keyword information transmission section 223 and an additional keyword processing section 224.

The in-group keyword ranking creation section 221 creates in-group keyword rankings, which are keyword rankings for each group, on the basis of the details of keyword registration in the user information storage section 112 described above and the details of keyword search request operation, and on the basis of the details stored in the group storage section 134 described above. Recommendation points for each keyword are included in these in-group keyword rankings.

If, when creating these in-group keyword rankings, the in-group keyword ranking creation section 221 knows, according to the website registration information in the user information storage section 112, that keyword registration has been performed by a user, then it first specifies the group to which the user who has performed this registration belongs, on the basis of the details stored in the group storage section 134.

If it is possible to specify the group to which the user who has performed the keyword registration belongs, then the in-group keyword ranking creation section 221 increases the recommendation points of that keyword in the keyword rankings of the specified group by just a predetermined number of points. And, on the basis of this result, the in-group keyword ranking creation section 221 updates the details stored in the in-group keyword ranking storage section 222.

Furthermore, if the in-group keyword ranking creation section 221 knows, on the basis of the deletion operation history information for keywords registered in the user information storage section 112, that registration of a keyword in association with a website has been performed by a user, then it first specifies the group to which the user who has performed this registration deletion belongs, on the basis of the details stored in the group storage section 134.

If it is possible to specify the group to which the user who has performed the registered keyword deletion operation belongs, then the in-group keyword ranking creation section 221 decreases the recommendation points of that keyword in the keyword rankings of the specified group by just a predetermined number of points. And, on the basis of this result, the in-group keyword ranking creation section 221 updates the details stored in the in-group keyword ranking storage section 222.

Furthermore, if the in-group keyword ranking creation section 221 knows, on the basis of the details of keyword search request operation in the user information storage section 112, that a keyword search request has been made by a user, and also knows the keyword which was specified at this time, then it first specifies the group to which the user who has made this keyword search request belongs, on the basis of the details stored in the group storage section 134.

If it is possible to specify the group to which the user who has made the keyword search request belongs, then the recommendation points of the designated keyword in the keyword rankings of the specified group are increased by just a third number of points. And, on the basis of this result, the in-group keyword ranking creation section 221 updates the details stored in the in-group keyword ranking storage section 222.

Furthermore, if the in-group keyword ranking creation section 221 knows, on the basis of the details of keyword registration operation in the user information storage section 112, that a new keyword registration operation has been performed, and also knows the keyword which was specified at that time, then it first specifies the group to which the user who has made this new keyword registration belongs, on the basis of the details stored in the group storage section 134.

If it is possible to specify the group to which the user who has performed the new keyword registration belongs, then the recommendation points of the designated keyword in the keyword rankings of the specified group are increased by just a fourth number of points that is higher than the third number of points. And, on the basis of this result, the in-group keyword ranking creation section 221 updates the details stored in the in-group keyword ranking storage section 222.

And if the recommended keyword information transmission section 223 decides, on the basis of the details stored in the user information storage section 112 described above, that it is possible to transmit recommended keyword information to some particular user, then it first specifies the group to which this particular user belongs, on the basis of the details stored in the group storage section 134.

If it is possible to specify the group to which this particular user belongs, then the recommended keyword information transmission section 223 obtains keyword priority levels, which are priority levels for supplying the recommended keywords, on the basis of the in-group keyword rankings related to the specified group in the in-group keyword ranking storage section 222. And the recommended keyword information transmission section 223 transmits the recommended keyword information to the user terminal device of this particular user, according to the keyword priority levels that have been obtained.

And if the additional keyword processing section 224 knows, on the basis of the details of keyword search request operation in the user information storage section 112, that a keyword search request has been made by a user, and also knows the keyword which was specified at this time, then it first specifies the group to which the user who has made this keyword search request belongs, on the basis of the details stored in the group storage section 134.

If it is possible to specify the group to which the user who has made the keyword search request belongs, then the additional keyword processing section 224 makes a decision as to whether or not any keyword registered in the in-group keyword ranking storage section 222 is one which resembles the designated keyword or that is associated therewith, and which it is supposed may be useful (for example, one whose recommendation points are higher than those of the designated keyword). If the result of this decision is negative, then the additional keyword processing section 224 terminates this additional keyword processing. On the other hand, if the result of this decision is affirmative, then the additional keyword processing section 224 sends the corresponding keyword to the user terminal device of the user who made the keyword search request, as an additional keyword candidate.

### [Operation]

Next, the operation of the web information retrieval device 100 having the structure described above will be explained. It should be understood that it will be supposed that, at the starting time point of the operation explained below, information is stored in the user information storage section 112, the bookmark information storage section 114, the keyword association storage section 123, the group storage section 134, the in-group site ranking storage section 212, and the in-group keyword ranking storage section 222.

On the basis of the website information included in the bookmarks stored in the bookmark information storage section 114, the site crawling section 121 of the keyword server 120 reads each website on its own initiative, and also periodically. When the results of such reading are reported, the keyword registration processing section 122 updates the details in the keyword association storage section 123 on the basis of those reading results.

When, in parallel with this processing by the keyword server 120, some one of the user terminal devices 300₁, 300₂, ... (hereinafter supposed to be the user terminal device 300ⱼ) accesses the web information retrieval device 100 in order to acquire web search information, then screen data for established web searches and display data corresponding to the user of this user terminal device 300ⱼ are transmitted from the web information retrieval device 100 to this user terminal device 300ⱼ. Here, the display data which corresponds to the user of the user terminal device 300ⱼ is different, according to whether or not the user of the user terminal device 300ⱼ is registered for usage of group service. In the following explanation, it will be supposed that at this stage the user of the user terminal device 300ⱼ is not registered for usage of group service.

The display data corresponding to the user of the user terminal device 300ⱼ that is sent to a user terminal device 300ⱼ, which is not registered for usage of group service, consists of commonly recommended site information data. Here, the recommended site information transmission section 213 of the site information processing section 210 of the user management server 130 creates this commonly recommended site information data on the basis of the bookmark rankings that are stored in the bookmark information storage section 114.

When in this state this user performs registration for usage of group service, the user information registration processing section 111 of the user information registration server 110 gathers user information having the details described above for this user, and registers this information in the user information storage section 112. It should be understood that, if previous user attribute information is changed by this user information, then the user attribute information for this user is updated. And, on the basis of this user attribute information in the user information storage section 112, the group creation processing section 133 decides to what group(s) this user whose registered attributes have been updated belongs, and updates the details of the group storage section 134 accordingly. It should be understood that, accompanying this updating of the user attribute information by the user information storage section 112, sometimes the standard for deciding whether or not the user belongs to a group also changes. This updating of the details of the group storage section 134 is performed periodically.

On the basis of the details in the group storage section 134 created as explained above, along with sending recommended site information data for in-group use to the user terminal device 300ⱼ of this user instead of the commonly recommended site information data, the recommended keyword information data for in-group use is also sent. Here, the recommended in-group site information data is created by the recommended site information transmission section 213, on the basis of the details stored in the group storage section 134 and on the basis of the details stored in the in-group site ranking storage section 212. Furthermore, the in-group recommended keyword information data is created by the recommended keyword information transmission section 223 on the basis of the details stored in the group storage section 134 and the details stored in the in-group keyword ranking storage section 222.

When, according to recommended site information supplied from the web information retrieval device 100 in this manner, selection operation for a website to be accessed is performed upon the user terminal device 300ⱼ, and reading of that website is performed, then this selection actuation is reported to the web information retrieval device 100. And, upon receipt of this report, the in-group site ranking creation section 211 of the site information processing section 210 of the user management server 130 specifies the group to which this user belongs, on the basis of the details stored in the group storage section 134. Moreover, the in-group site ranking creation section 211 increases the recommendation points for this website which has been selected in the site rankings of the specified group by just the first number of points. And, on the basis of this result, the in-group site ranking creation section 211 updates the details stored in the in-group site ranking storage section 212. The results of this updating are reflected in the subsequent supply of recommended site information to the people who make up this group.

Furthermore, when a user who has read this website which has been selected forms an evaluation that this selected website is useful, and performs a site registration operation in which he designates this selected website, then this site registration operation is reported to the web information retrieval device 100. Upon receipt of this report, the in-group site ranking creation section 211 of the keyword information processing section 220 of the user management server 130 specifies the group to which this user belongs, on the basis of the details stored in the group storage section 134. Moreover, the in-group site ranking creation section 211 increases the recommendation points for this website which has been selected in the site rankings of the specified group by just the second number of points that is greater than the first number of points. And, on the basis of this result, the in-group site ranking creation section 211 updates the details stored in the in-group site ranking storage section 212. The results of this updating are also reflected in the subsequent supply of recommended site information to the people who make up this group.

When keyword designation operation is performed upon the user terminal device 300ⱼ according to the above described recommended keyword information that has been supplied from the web information retrieval device 100, this keyword designation operation is reported to the web information retrieval device 100. Upon receipt of this report, the recommended site information transmission section 213 creates in-group recommended site information data on the basis of the details stored in the in-group site ranking storage section 212, and transmits it to the user terminal device 300ⱼ. In parallel with this processing by the recommended site information transmission section 213, the in-group keyword ranking creation section 221 specifies the group to which this user belongs, on the basis of the details stored in the group storage section 134. And the in-group keyword ranking creation section 221 increases the recommendation points of this designated keyword in the keyword rankings of the specified group by just the third number of points. Then, on the basis of this result, the in-group keyword ranking creation section 221 updates the details stored in the in-group keyword ranking storage section 222. This updated result is reflected in the subsequent supply of recommended keyword information to the members who make up this group.

Furthermore, when a user who has utilized this designated keyword and has read a website has evaluated that this designated keyword to be useful, and has performed a keyword registration operation in which this designated keyword is specified, then this keyword registration operation is reported to the web information retrieval device 100. Upon receipt of this report, the in-group keyword ranking creation section 221 of the keyword processing information processing section 220 of the management server 130 specifies the group to which this user belongs, on the basis of the details stored in the group storage section 134. And the in-group keyword ranking creation section 221 increases the recommendation points of this designated keyword in the keyword rankings of the specified group by just the fourth number of points that is greater than the third number of points. Then, on the basis of this result, the in-group keyword ranking creation section 221 updates the details stored in the in-group keyword ranking storage section 222. This updated result is reflected in the subsequent supply of recommended keyword information to the members who make up this group.

Even when operation has been performed as described above to issue a keyword search request in which an individual keyword is designated, but without utilizing a recommended site or a recommended keyword, then processing is executed by the recommended site information transmission section 213 and the in-group keyword ranking creation section 221, similar to the processing in the case described above in which a recommended keyword is employed. Furthermore, if actuation has been performed to issue a keyword search request in which a keyword is designated, then, in addition, the additional keyword processing section 224 of the keyword information processing section 220 of the management server 130 executes additional keyword processing.

In this additional keyword processing, first the additional keyword processing section 224 specifies the group to which this user belongs, on the basis of the details stored in the group storage section 134. Next, the additional keyword processing section 224 makes a decision as to whether or not any registered keyword which resembles this individual keyword or that is associated therewith, and which it is supposed may be useful, is registered in the in-group keyword ranking storage section 222. If the result of this decision is negative, then the additional keyword processing section 224 terminates this additional keyword processing. On the other hand, if the result of this decision is affirmative, then the additional keyword processing section 224 sends the corresponding keyword to the user terminal device 300ⱼ of this user as an additional keyword candidate.

As has been explained above, in this embodiment, for each user, the group creation processing section 133 evaluates similarity between sets of user attribute information on the basis of user attribute information of at least one type, and creates groups including pluralities of users who have been evaluated as possessing mutual similarity.

On the basis of the result of the above group creation, when access to a website has been performed by a user, the in-group site ranking creation section 211 increases the recommendation points of this site which has been accessed, for the group to which the user who performed access thereto belongs, by just the first number of points, and also, if the user who has performed access has performed site registration, i.e. registration of the website, increases the recommendation points of this website for which site registration has been performed, for the group to which the user who performed site registration thereof belongs, by just the second number of points that is greater than the first number of points. And, on the basis of the site recommendation points as updated and the type of group to which the user belongs, the recommended site information transmission section 213 obtains site priority levels, i.e. priority levels for supply of the website information that has been found. And the recommended site information transmission section 213 transmits the recommended site information to the terminal device of the user, according to these site priority levels that have been obtained.

Thus, according to this embodiment, it is possible to support efficient access by each of the users to useful websites, so that it is possible to enhance the convenience from the point of view of the users.

Furthermore, in the embodiment described above, when a keyword search request has been issued by a user, the in-group keyword ranking creation section 221 increases the recommendation points of the keyword that has been designated in the keyword search request, for the group to which the user who issued the keyword search request belongs, by just the third number of points, and also, when the user who issued the keyword search request has performed keyword registration, increases the recommendation points of the keyword for which keyword registration has been performed, for the group to which the user who issued the keyword search request belongs, by just the fourth number of points that is greater than the third number of points. And, on the basis of the result of updating the keyword recommendation points and the type of groups to which the user belongs, the recommended keyword information transmission section 223 obtains keyword priority levels, i.e. recommended keyword supply priority levels, and transmits recommended keyword information to the terminal device of the user according to these keyword priority levels. Due to this, during keyword search of websites, it is possible to supply to each user keyword candidates that reflect the usefulness from the point of view of the groups to which that user belongs.

Furthermore since, in the embodiment described above, it is possible to supply to the user, as additional keywords, keywords which are estimated to be useful on the basis of the keyword(s) specified by the keyword search request, accordingly it is possible to enhance the convenience to the user by yet a further level.

### [Modified embodiments]

The present invention is not limited to the embodiment described above; a number of types of modification are possible.

For example, if so-called webmail is sent via a web information retrieval device, it would be possible to arrange to give further consideration to the results of analyzing the details of such webmail, during the derivation of the proclivities of the user for website access.

] And, if it is possible for the web information retrieval device to acquire group separation information obtained by inter-relation with an external social network service which the user employs, then it is possible to arrange to include this group separation information as one item of the user attribute information.

Moreover, if the web information retrieval device is endowed with a function of supplying a social networking service, then it is possible to utilize the results of group creation by the group creation processing section 133 for group separation by that social networking service.

It should be understood that, if the administrator of a specified site has purchased a specified keyword in association with that specified site, in which a subject user attribute is specified, then even when, for example, that specific keyword is not initially included for that specified site in the original state, it is still possible to register that specific keyword in the in-group rankings for the group corresponding to the designation of that subject user attribute. In this case it is also possible to arrange to erase the association between that specific keyword and the specified site if it is decided that the support of the user has not been received, according to subsequent access to the specified site by keyword searching in which the specific keyword is specified, keyword registration related to the specific keyword, or changes to the site register related to the specified site.

While, in the embodiment described above, it was arranged not to include any result evaluation parameters in the site registration, it would also be possible to arrange, during site registration, for this site registration to be performed while designating value(s) for one or more result evaluation parameters defined in a plurality of stages. Here, according to the value(s) of the evaluation parameter(s), it may be arranged for it to be possible to set a positive evaluation results in relation to usefulness at any desired number of stages, and it also may be arranged for it to be possible to designate a negative evaluation result in relation to usefulness at any desired number of stages. Moreover, it also may be arranged for it to be possible to set cases in which the evaluation results in relation to usefulness are affirmative and cases in which they are negative, according to the value of a result evaluation parameter.

In this case, the in-group site ranking creation section 211 changes the recommendation points of that selected website in the keyword rankings of the specified group, and changes the details stored in the in-group site ranking storage section 212, by just a number of points that corresponds to the value of the result evaluation parameter that was designated during site registration. As a result, it is possible to supply to the user recommended site information that reflects a degree of usefulness or of non-usefulness corresponding to the results of evaluation by each user in relation to that specified website, in an appropriate manner.

While in the embodiment described above an example has been shown in which a user who has performed access to a website registers, this website that has been the subject of access, i.e. registers an evaluation thereof, it would also be possible to arrange for it to be possible for a user who already knows the details of that website to perform such site registration.

In the embodiment described above, it was supposed that the subject of access by the user terminal device was a website that the user terminal device could access. By contrast, it would also be possible for the subject of access by the user terminal device to be an information page that can be accessed via the internet by the user terminal device. Moreover, it would also be possible for the subject of access by the user terminal device to be, for example, an intra-enterprise site or a document file that can be accessed by the user terminal device via an intra-enterprise intranet.

If the access subject is an in-business site or a document file or the like that can be accessed by the user terminal device via an in-business intranet, then weightings are assigned when separating users into groups by demographic information related to business organization, such as for example range of duties, department of affiliation, and so on; and moreover, when making it possible to access the in-business site or the document file via the intranet, by arranging for it to be possible to designate, as group attributes for which the recommendation points are to be increased, ranges of duties and/or departments of affiliation, and/or the like, it is made possible to recommend at high efficiency access subjects which are useful from the point of view of a user.

Here, if the access subject is an in-business site which has an in-business URL, it is possible to arrange to perform updating of site rankings and/or keyword rankings, in a similar manner to the case of a website in the embodiment described above. On the other hand, for a document file or the like which has no in-business URL, and moreover for which it is not possible to be certain that it will be included after searching, it will be acceptable to arrange to attach an intrinsic identifier, and to handle this identifier in a similar manner to that for an in-business URL or keyword.

In the embodiment described above, it was arranged for the recommended site information transmission section 213 to obtain a site priority level, i.e. a supply priority level for found website information, on the basis of the site recommendation points and the type of group to which the user belongs, and to transmit recommended site information to the terminal device of the user according to the site priority level which is obtained. By contrast, it would also be possible to arrange for the recommended information transmission section to transmit recommended access subject information to the terminal device of the user, with the exception of access subjects for which the user of the terminal device has performed access subject evaluation registration. In a case, for example, such as when the access subject is information related to goods, and access subject evaluation registration has been performed after these goods have been purchased and used, so that it is not necessary to recommend this access subject a second time to the user terminal device which has been utilized for that access subject evaluation registration, then it is possible to prevent the user of that utilized terminal device from experiencing annoyance due to re-recommendation of that access subject.

While, in the embodiment described above, it was arranged for evaluation result parameters not to be included in the keyword registration, it would also be possible to arrange, during keyword registration, for the keyword registration to be performed while designating values of result evaluation parameters defined at a plurality of stages. Here, according to the value of a result evaluation parameter, it might be arranged for it to be possible to designate a positive evaluation result in relation to usefulness at any desired number of stages; and it may also be arranged for it to be possible to designate a negative evaluation result in relation to usefulness at any desired number of stages. Moreover, it might also be arranged for it to be possible to designate cases in which the evaluation results in relation to usefulness are affirmative and cases in which they are negative, according to the value of a result evaluation parameter.

In this case, the in-group keyword ranking creation section 221 changes the recommendation points of that selected keyword in the keyword rankings of the specified group, and changes the details stored in the in-group keyword ranking storage section 222, by just a number of points that corresponds to the value of the result evaluation parameter that was designated during keyword registration. As a result, it is possible to supply to the user recommended keyword information that reflects a degree of usefulness or of non-usefulness corresponding to the results of evaluation by each user in relation to that specified keyword, in an appropriate manner.

### Industrial Applicability

As has been explained above, the access subject information retrieval device of the present invention can be applied when supporting efficient access by various users to useful access subjects.

## Claims

1. An access subject information retrieval device that supplies retrieval information for access subjects to users via user terminal devices, comprising:
a user profile information storage means in which is registered, for each user, a set of user profile information that is at least one of user attribute information, which is information about at least one type of attribute of the user;
a group creation means that evaluates similarity between a plurality of said sets of user profile information registered in said user profile information storage means, and creates a group including a plurality of users for whom it has been evaluated that they possess mutual similarity;
a group specification means that specifies at least a single group to which each user belongs;
an access subject recommendation points updating means that increases recommendation points of said access subject that has been accessed for the group to which the user who has performed said access belongs by just a first number of points, when access to an access subject is performed by a user, and also changes the recommendation points of said access subject for which said access subject evaluation registration has been performed, for the group to which the user who has performed said access subject evaluation registration belongs by just a number of points that corresponds to the details of said access subject evaluation registration, which is evaluation registration of an access subject by a user, when access subject evaluation registration is performed; and
a retrieval information transmission means that obtains access subject priority levels, that are priority levels for supply of access subject information that has been found, on the basis of the results of updating by said access subject recommendation points updating means and on the basis of the type of group to which the user of said user terminal device belongs, and transmits recommended access subject information to said user terminal device according to said access subject priority levels.

2. An access subject information retrieval device according to Claim 1, wherein:
said access subject evaluation registration is registration of an access subject that does not include any result evaluation parameter; and
when said access subject evaluation registration has been performed, said access subject recommendation points updating means increases the recommendation points of the access subject for which said access subject evaluation registration has been performed, for the group to which the user who has performed said access subject evaluation registration belongs, by just a second number of points which is greater than said first number of points.

3. An access subject information retrieval device according to Claim 1, wherein:
said access subject evaluation registration is registration of an access subject that includes a result evaluation parameter; and
when said access subject evaluation registration has been performed, said access subject recommendation points updating means changes the recommendation points of the access subject for which said access subject evaluation registration has been performed, for the group to which the user who has performed said access subject evaluation registration belongs, by just a number of points which corresponds to the value of said evaluation parameter.

4. An access subject information retrieval device according to any one of Claims 1 through 3, wherein said retrieval information transmission means transmits recommended access subject information to said user terminal device, with the exception of an access subject for which the user of said user terminal device has performed said access subject evaluation registration.

5. An access subject information retrieval device according to any one of Claims 1 through 4, wherein said access subject is at least one of a website and an information page to which said user terminal device is connected over the internet.

6. An access subject information retrieval device according to any one of Claims 1 through 4, wherein said access subject is at least one of a site and a document file which can be accessed by said user terminal device via an intranet to which said user terminal device is connected.

7. An access subject information retrieval device according to any one of Claims 1 through 6, wherein said user attribute information comprises at least one of information selected from the group consisting of bookmark information stored in said user terminal device and access subject evaluation information and keyword information.

8. An access subject information retrieval device according to any one of Claims 1 through 7, wherein said user attribute information comprises at least one of information selected from the group consisting of history information about access subject evaluation registration by the user, deletion history information about evaluation registration for said access subject, history information about keyword registration, deletion history information about registration of said keyword, history information about access to the access subject, and history information about keyword searching.

9. An access subject information retrieval device according to any one of Claims 1 through 8, wherein said user attribute information comprises user demographic information.

10. An access subject information retrieval device according to any one of Claims 1 through 9, wherein, said user attribute information comprises group separation information, when it is possible to acquire said group separation information provided by association with an external social networking service which a user utilizes.

11. An access subject information retrieval device according to any one of Claims 1 through 10, further endowed with a function of supplying a social networking service; and wherein the result of group creation by said group creation means is utilized for group separation when supplied to said social networking service.

12. An access subject information retrieval device according to any one of Claims 1 through 11, further comprising:
a keyword recommendation points updating means which increases recommendation points for the keyword designated in said keyword search request for the group to which the user who has performed said keyword search request belongs by just a third number of points, when a keyword search request is issued by a user, and changes the recommendation points for the keyword for which said keyword evaluation registration has been performed for the group to which the user who has performed said keyword search request belongs by just a number of points that corresponds to the details of said keyword evaluation registration, when a keyword evaluation registration is performed by a user who has performed said keyword search request; and
a keyword information transmission means which obtains keyword priority levels, which are priority levels for supply of recommended keywords, on the basis of the results of updating by said keyword recommendation points updating means and on the basis of the type of group to which the user of said user terminal device belongs, and transmits recommended keyword information to said user terminal device according to said keyword priority levels.

13. An access subject information retrieval device according to Claim 12, wherein:
said keyword evaluation registration is registration of a keyword that does not include a result evaluation parameter; and
when said keyword evaluation registration has been performed, said keyword recommendation points updating means increases the recommendation points of the keyword for which said keyword evaluation registration has been performed, for the group to which the user who has performed said keyword evaluation registration belongs, by just a fourth number of points which is higher than said third number of points.

14. An access subject information retrieval device according to Claim 12, wherein
said keyword evaluation registration is registration of a keyword that includes a result evaluation parameter; and
when said keyword evaluation registration has been performed, said keyword recommendation points updating means changes the recommendation points of the keyword for which said keyword evaluation registration has been performed, for the group to which the user who has performed said keyword evaluation registration belongs, by just a number of points that corresponds to the value of said evaluation parameter.

15. An access subject information retrieval device according to any one of Claims 12 through 14, further comprising an additional keyword candidate transmission means which when it has been discovered, on the basis of the keyword that has been designated in said keyword search request, that a keyword which it is supposed will be useful exists in relation to a group to which the user who has issued said keyword search request belongs, transmits said keyword which has been found to the user terminal device of the user who issued said keyword search request.
